# EUROPEAN PATENT APPLICATION

(11) **EP 4 773 015 A1**
(43) Date of publication of application: **08.07.2026**
(21) Application number: 24887568.4
(22) Date of filing: 26.08.2024
(51) Int. Cl.: G06F 16/27, G06F 9/46

(54) **DATA SHARDING PROCESSING METHOD AND APPARATUS, DEVICE, STORAGE MEDIUM, AND PROGRAM PRODUCT**

(30) Priority: 06.11.2023 CN 202311470163
(71) Applicant: Tencent Technology (Shenzhen) Company Limited, Shenzhen, Guangdong 518057 (CN)
(72) Inventor: LIU, Chang, Shenzhen, Guangdong 518057 (CN); ZHU, Chong, Shenzhen, Guangdong 518057 (CN); LEI, Hailin, Shenzhen, Guangdong 518057 (CN); PAN, Anqun, Shenzhen, Guangdong 518057 (CN)
(74) Representative: EP&C
(86) International application number: PCT/CN2024/114437
(87) International publication number: WO 2025/097949

(57) **Abstract**

The present application relates to the technical field of distributed storage, and in particular to a data sharding processing method and apparatus, a device, a storage medium, and a program product. The method comprises: in response to a split instruction for a first data shard in a database, creating a second data shard; controlling transactions having not been committed in the first data shard to be suspended from entering a commit phase; in response to the completion of commit of transactions having entered the commit phase in the first data shard, controlling transactions having not been read and written in the first data shard to be suspended from entering a read-write phase; transferring first transaction data from the first data shard to the second data shard, wherein the first transaction data is data, among the data of a first transaction, corresponding to the second data shard obtained by splitting; and in response to the completion of transfer of the first transaction data, controlling the transactions in the first data shard to resume entering the read-write phase and/or the committee phase. The present application can reduce the transaction blocking time while ensuring the execution efficiency of distributed transactions.

## Description

### RELATED APPLICATION

This application claims priority to Chinese Patent Application No. 2023114701631, entitled "DATA REGION PROCESSING METHOD AND APPARATUS, DEVICE, STORAGE MEDIUM, AND PROGRAM PRODUCT" and filed with the China National Intellectual Property Administration on November 6, 2023, which is incorporated by reference in its entirety.

### FIELD OF THE TECHNOLOGY

This application relates to the field of distributed storage technologies, and in particular, to a data region processing technology.

### BACKGROUND OF THE DISCLOSURE

In a system supporting distributed transactions, timely scheduling of data distribution can mitigate sudden hotspots and achieve load balancing.

In the related art, a data distribution policy may be manually modified by an administrator. Alternatively, load balancing may be automatically achieved by splitting overloaded regions during transaction blocking.

However, a manual manner in the related art involves a large amount of data migration, which is prone to errors and affects transaction processing. An automatic manner in the related art involves splitting overloaded regions, which will prolong transaction blocking time and easily impact the read/write performance and commit performance of transactions.

### SUMMARY

This application provides a data region processing method and apparatus, a device, a storage medium, and a program product, to shorten transaction blocking time while ensuring the execution efficiency of distributed transactions. The technical solutions are as follows.

According to an aspect of this application, a data region processing method is provided. The method is performed by a computer device. The method includes:
creating a second region in response to a split instruction for a first region in a database, the split instruction indicating splitting data in the first region into the second region;
controlling an uncommitted transaction in the first region to be suspended from entering a commit phase;
controlling, in response to that a transaction already in the commit phase in the first region has been committed completely, an unread/unwritten transaction in the first region to be suspended from entering a read/write phase;
transferring first transaction data from the first region to the second region, the first transaction data being data corresponding to the second region in data of a first transaction, the first transaction being an active transaction, having data to be transferred to the second region, of the first region, and the active transaction being a transaction in the read/write phase; and
controlling, in response to the first transaction data being transferred completely, the transaction in the first region to resume entering the read/write phase and/or the commit phase.

According to another aspect of this application, a data region processing apparatus is provided. The apparatus includes:
a creation module, configured to create a second region in response to a split instruction for a first region in a database, the split instruction indicating splitting data in the first region into the second region;
a first suspension module, configured to control an uncommitted transaction in the first region to be suspended from entering a commit phase;
a second suspension module, configured to control, in response to that a transaction already in the commit phase in the first region has been committed completely, an unread/unwritten transaction in the first region to be suspended from entering a read/write phase;
a transfer module, configured to transfer first transaction data from the first region to the second region, the first transaction data being data corresponding to the second region in data of a first transaction, the first transaction an active transaction, having data to be transferred to the second region, of the first region, and the active transaction being a transaction in the read/write phase; and
a resuming module, configured to control, in response to the first transaction data being transferred completely, the transaction in the first region to resume entering the read/write phase and/or the commit phase.

According to another aspect of this application, a computer device is provided. The computer device includes a processor and a memory. The memory has at least one instruction, at least one program, a code set, or an instruction set stored therein. The at least one instruction, the at least one program, the code set, or the instruction set is loaded and executed by the processor to implement the data region processing method according to the foregoing aspect.

According to another aspect of this application, a computer-readable storage medium is provided. The readable storage medium has at least one instruction, at least one program, a code set, or an instruction set stored therein. The at least one instruction, the at least one program, the code set, or the instruction set is loaded and executed by a processor to implement the data region processing method according to the foregoing aspect.

According to another aspect of this application, a computer program product is provided. The computer program product includes computer instructions. The computer instructions are stored in a computer-readable storage medium. A processor reads the computer instructions from the computer-readable storage medium and executes the computer instructions, to implement the data region processing method according to the foregoing aspect.

The technical solutions provided in the embodiments of this application may include the following beneficial effects.

According to the solutions shown in the embodiments of this application, a second region is created in response to a split instruction for a first region in a database. An uncommitted transaction in the first region is suspended from entering a commit phase. An unread/unwritten transaction in the first region is suspended, in response to that a transaction already in the commit phase in the first region has been committed completely, from entering a read/write phase. First transaction data is transferred from the first region to the second region, where the first transaction data is data corresponding to the second region in data of a first transaction after the splitting. The transaction in the first region is controlled, in response to the first transaction data having been transferred completely, to enter the read/write phase and/or the commit phase. According to this solution, before transaction blocking, the second region is first constructed. Meanwhile, the transaction blocking is executed in two phases: controlling the uncommitted transaction to be suspended from entering the commit phase and controlling the unread/unwritten transaction to be suspended from entering the read/write phase. When a blocked transaction is committed, read/write of the transaction and a transaction to be committed completely are not affected. This application can shorten transaction blocking time while ensuring execution efficiency of a distributed transaction.

### BRIEF DESCRIPTION OF THE DRAWINGS

To describe the technical solutions of embodiments of this application more clearly, the following briefly introduces the accompanying drawings required for describing the embodiments. Apparently, the accompanying drawings in the following description show only some embodiments of this application, and a person of ordinary skill in the art may still derive other drawings from these accompanying drawings without creative efforts.
FIG. 1 is an architectural diagram of a distributed database of a conventional database and table sharding architecture according to this application.
FIG. 2 is an architectural diagram of a distributed database according to this application.
FIG. 3 is a flowchart of a data region processing method according to an exemplary embodiment of this application.
FIG. 4 is a flowchart of a data region processing method according to another exemplary embodiment of this application.
FIG. 5 is a flowchart of a data region processing method according to still another exemplary embodiment of this application.
FIG. 6 is a flowchart of a data region processing method according to yet another exemplary embodiment of this application.
FIG. 7 is a flowchart of suspending a new transaction corresponding to a first region to enter a read/write phase in a data region processing method according to an exemplary embodiment of this application.
FIG. 8 is a flowchart of a data region processing method according to a further exemplary embodiment of this application.
FIG. 9 is another architectural diagram of a distributed database according to this application.
FIG. 10 is an implementation flowchart of a data region processing method according to an exemplary embodiment of this application.
FIG. 11 is a split flowchart of a picture rendering method according to an exemplary embodiment of this application.
FIG. 12 is a flowchart of a 2PC protocol according to this application.
FIG. 13 is a schematic diagram of a 2PC case according to an exemplary embodiment of this application.
FIG. 14 is a schematic diagram of commit of the 2PC case in FIG. 13.
FIG. 15 is a 2PC flowchart of a picture rendering method according to an exemplary embodiment of this application.
FIG. 16 is a block diagram of a data region processing apparatus according to an exemplary embodiment of this application.
FIG. 17 is a structural block diagram of a computer device according to an exemplary embodiment of this application.

The accompanying drawings, which are incorporated in and constitute a part of this specification, illustrate embodiments consistent with this application and, together with the specification, serve to explain the principles of this application.

### DESCRIPTION OF EMBODIMENTS

To make the objectives, technical solutions, and advantages of this application clearer, the following further describes implementations of this application in detail with reference to the accompanying drawings.

Exemplary embodiments are described in detail herein, and examples of the exemplary embodiments are shown in the accompanying drawings. When the following description involves the accompanying drawings, unless otherwise indicated, the same numerals in different accompanying drawings represent the same or similar elements. The implementations described in the following exemplary embodiments do not represent all implementations consistent with this application. On the contrary, the implementations are merely examples of apparatuses and methods that are described in detail in the appended claims and that are consistent with some aspects of this application.

The terms used in the present disclosure are for the purpose of describing specific embodiments only and are not intended to limit the present disclosure. The singular forms of "a" and "the" used in the present disclosure and the appended claims are intended to include the plural forms as well, unless the context clearly indicates otherwise. The term "and/or" used herein indicates and includes any or all possible combinations of one or more associated listed items.

User information (including, but not limited to, user equipment information, user personal information, and the like) and data (including, but not limited to, data for analysis, stored data, displayed data, and the like) involved in this application both are information and data that are authorized by a user or fully authorized by all parties. Collection, use, and processing of related data need to comply with relevant laws and regulations of relevant countries and regions. For example, object behaviors such as attack operations involved in this application are obtained under full authorization.

Although the terms such as "first" and "second" may be used in the present disclosure to describe various pieces of information, the information is not required to be limited to these terms. These terms are merely used to distinguish between information of the same type. For example, without departing from the scope of the present disclosure, a first parameter may alternatively be referred to as a second parameter. Similarly, a second parameter may alternatively be referred to as a first parameter. Depending on the context, for example, the word "if" used herein may be interpreted as "while" or "when," or "in response to determination."

The following describes some nouns involved in this application.

Database (DB): An organic collection of a large amount of shared data that is organized in a particular structure and stored in a computer for a long time. Each database has one or more application programming interfaces (API) for creating, accessing, managing, searching, and replicating the data stored in the database.

Region (data region): The smallest management unit of data, which may be configured for flexible data scheduling. For example, when a node is under extremely high load, some of regions may be migrated to other nodes.

Write Batch: Batch is a data structure for storing active transaction data, which can be considered as a container for the data. Each transaction has its own write batch, and data stored in one write batch belongs to only one transaction. For distributed transactions, each transaction has its own write batch in a transaction context of each Region. The transaction context is a data structure or environment including all information for running a transaction, which may include transaction ID, level of isolation, timeout and resource occupation.

Transaction Data: A part of the transaction context. When splitting a transaction, after transmitting transaction data corresponding to an Old Region to a New Region, a transaction context is constructed on the New Region, to ensure that both the Old Region and the New Region have corresponding transaction contexts.

Raft Group: A basic unit of a data synchronization group, consisting of a plurality of copies. One of the copies serves as a Leader, and the remaining one or more copies serve as Followers. The Leader copy is responsible for synchronizing data to Followers. Specifically, a Raft Log (also referred to as a proposal) is transmitted to all Follower copies. After the Raft Log is persisted to local disks of a majority of Follower copies, the copies may apply the Raft Log. To be specific, a corresponding operation is executed according to specific content contained in the Raft Log.

2 Phase Commit (2PC): A general method to ensure the commit atomicity of distributed transactions. 2PC divides the transaction commit into two phases: a Prepare Phase (P) and a Commit Phase (C). An initiator of a transaction is called a Coordinator. There is usually only one coordinator, responsible for deciding the commit and rollback of the entire distributed transaction. Executors of the transaction are called Participants. There are usually a plurality of participants, responsible for the commit and rollback of own local transactions.

Remote Procedure Call (RPC): A protocol for requesting services from a remote computer program over a network without the need to understand underlying network technologies. RPC is a manner of inter-module communication that requests services from remote nodes over a network.

Query Per Second (QPS): Also known as queries per second, referring to the number of queries to which a server can respond per second, or the number of requests which can be processed by a server per second. QPS is a metric for measuring traffic processed by a specific query server within a specified time, and also represents a maximum throughput capacity.

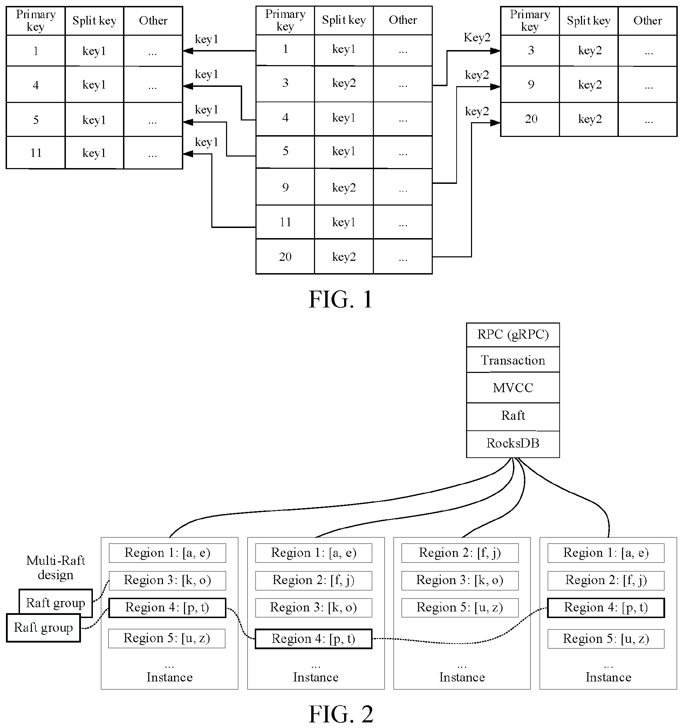

Please refer to FIG. 1, which shows an architectural diagram of a distributed database of a conventional database and table sharding architecture according to this application.

As shown in FIG. 1, the distributed database of the conventional database and table sharding architecture is a simple data distribution solution. Essentially, each underlying storage node is a standalone database. For a business table with a large volume of data, the underlying layer splits an original table into a plurality of tables based on a database sharding key or a table sharding key specified by a user, which are then distributed across different storage nodes. A proxy node is deployed above all storage nodes to handle routing and data aggregation, enabling the user to perform data query without caring about an actual underlying data distribution.

Please refer to FIG. 2, which shows an architectural diagram of a distributed database according to this application.

As shown in FIG. 2, the distributed database architecture splits the entire distributed database into the following three modules:

Storage Cluster: Store KV data and perform Region on data according to Key values to disperse data hotspots. Each region corresponds to a Raft Group in the background to achieve active-standby data synchronization.

Computing Cluster: Convert SQL statements for user data into KV requests and transmit the KV requests to the storage cluster.

Central Management and Control Cluster: Detect a data distribution of the storage cluster, instruct the storage cluster to split, merge, and migrate regions to ensure load balancing, and also provide a global timestamp timing service.

Each node in the storage cluster periodically reports local region information to nodes in the central management and control cluster in a heartbeat manner. If a node in the central management and control cluster detects that the size of a region exceeds a set threshold, a region split job will be issued to the Leader copy of the region. The job includes a range of split regions (covering a range of the original region and a range of a newly split region). After receiving the job, the Leader copy commits a Proposal in the Raft Group. When the Proposal is synchronized to a majority of copies, each copy will create a New Region when applying the Proposal. When a majority of copies have created the New Region, a Raft Group corresponding to the underlying New Region meets Raft's majority requirement. At this point, the Leader copy may be elected to provide services.

The storage cluster distinguishes each piece of data by a "key". For example, in a row-oriented database, each record stored in the storage cluster corresponds to a row of data in the table. For a distributed database of a conventional database and table sharding architecture, a "key" of data may be a value of a primary key or a table sharding key. For a distributed database based on a KV storage engine, a "key" of data may be an encoded Key value. The "key" of data determines an interval into which the data is partitioned. Currently, common data partitioning schemes may be roughly divided into "key hash-based partitioning" and "key interval-based partitioning".

The partitioning manner of "key hash-based partitioning" is based on a key hash function. This function takes a value of the "key" as input and outputs an unsigned integer. In this way, a database system may construct a mapping relationship from "key value" to "hash value". During partitioning, each partition corresponds to a range of unsigned integers, and the ranges of each partition do not overlap. If a hash value of a key value of a particular piece of data computed by a hash function falls within an integer range of a particular partition, the data will be stored in the partition.

The advantage of the data partitioning is that as long as the hash function is reasonably computed, a storage system may evenly distribute a large amount of data across a plurality of partitions, ensuring that the data volume of each partition is almost the same. Therefore, the data partitioning manner has a good effect of dispersing hotspots.

The partitioning manner of "key interval-based partitioning" allows each partition to directly map to a continuous key value interval, and the ranges of each partition do not overlap. The partitioning manner does not rely on a hash function and is relatively simple.

The advantage of "key interval-based partitioning" is that during range query, it is only necessary to find several data partitions included in the query range and then perform data query only on these partitions. The query manner narrows the range of data query, improves query efficiency, and avoids unnecessary resource consumption.

The life cycle of a distributed transaction may be roughly divided into two phases: a read/write phase and a commit phase.

### I. Read/write Phase

During this phase, a user issues an SQL request to a database system to read and write data. Data written in the read/write phase is uncommitted data before a transaction is committed. In accordance with an isolation requirement of the transaction, this part of data is not accessible to other transactions.

In some distributed database systems, uncommitted transaction data is cached in a computing layer. A computing node only transmits transaction data to a corresponding region of the storage cluster until the transaction enters the commit phase. Since the storage cluster does not cache uncommitted transaction data, scheduling such as splitting and merging of regions in the storage cluster will not affect ongoing transactions, ensuring that data scheduling is transparent to the user to a certain extent.

### II. Commit Phase

When a user issues a COMMIT SQL statement to the database system, the transaction enters a commit process. At this point, the database system performs detections on the transaction to determine whether the transaction commit will violate data consistency (e.g., detecting data conflicts with other transactions for transactions based on optimistic concurrency control), and persists data written by the transaction through logs (e.g., persisting WAL logs to disk or committing a Proposal to the Raft Group). If the transaction passes the detections, the transaction may be successfully committed, and the data written by the transaction will then be visible to other transactions.

In some distributed database systems, for simplicity, the atomicity of distributed transactions is guaranteed by the computing layer (e.g., using a commit protocol Percolator). In this architecture, a storage engine does not need to have the concept of transactions. To be specific, the storage engine does not guarantee the atomicity of writing a plurality of KV data entries. As a result, the storage engine may process concurrent KV data writing and region scheduling more conveniently. If a KV writing fails due to region scheduling, only the single KV needs to be retried, rather than all data of the transaction.

From the analysis of the foregoing data partitioning policy, the partitioning manner of "key hash-based partitioning" has a good effect on dispersing hotspots, but the disadvantage is that range query requires accessing all data partitions, resulting in low efficiency. In contrast, the "key interval-based partitioning" has the disadvantage that data hotspots may still exist. If business access to data is concentrated within a small range, frequent region splitting is required to be triggered to split the hotspots.

Considering that data query efficiency is the top priority, the technical solution of the embodiments of this application preferentially adopts the manner of "key interval-based partitioning".

To address the data hotspot problem, first, the business side may perform randomization processing on data. For example, for businesses prone to generating data hotspots, the business side may compute a hash function on a primary key column when writing data to ensure that inserted data is distributed across different regions. Second, as long as the impact of region splitting on transactions is optimized to a sufficiently low level at a storage layer, the impact of data hotspots can be reduced by increasing the frequency of region splitting. The region split idea provided by the technical solution of the embodiments of this application achieves business-transparent data splitting and may address this problem.

Although the distributed database of the conventional database and table sharding architecture are relatively simple to implement, the lack of effective data distribution detection means results in inflexible control over data partitioning and inability to quickly schedule sudden hotspot data. For example, during table creation, a database administrator (DBA) needs to manually specify table sharding keys. In the case of sudden hotspots, DBA also needs to manually modify the data distribution policy to distribute data to adjacent nodes. The data dispersing manner not only consumes human resources but also involves a large amount of data migration, which can easily affect business.

Therefore, an alternative region policy is: based on a new distributed database architecture, the central management and control cluster is used to control the splitting, merging, and migration of regions, enabling automatic load balancing without relying on DBA.

However, existing region solutions still affect business. As mentioned above, the manner of synchronizing a Proposal in the Raft Group requires waiting for the Proposal to be synchronized to a majority of copies before constructing a new Raft Group. After another round of elections, a new region can provide data writing services to the outside world. This cycle spans one Raft Group election timeout period, which usually takes several seconds. After an old region synchronizes the Proposal, it will no longer support writing data to a range corresponding to the new region. This means that a data range corresponding to the new region is unavailable for these few seconds, which may easily cause a drop in QPS.

For the distributed database based on the transaction protocol Percolator, since the storage cluster does not need to guarantee the atomicity of writing a plurality of data entries, processing concurrency between data writing and region splitting is simpler. However, the cost of this implementation is that the transaction is ultimately persisted to each KV data entry. During the commit process, two additional KVs are required to be written to ensure transaction atomicity (according to the requirements of the Percolator protocol, the three KV data entries are written to a data column family, a lock column family, and a write column family respectively). This means that if Percolator is used to guarantee transaction atomicity, a data communication volume between the computing cluster and the storage cluster, the number of Proposals for Raft Log synchronization in the storage cluster, and an input/output (I/O) overhead of data persistence to disk will be all increased by 2 to 3 times, resulting in poor commit performance.

To ensure the commit efficiency of distributed transactions, the technical solutions provided in subsequent embodiments of this application fully offload distributed transactions to the storage cluster. For a transaction in the read/write phase, uncommitted data is maintained in a transaction context and managed in a memory by a region where the data resides. Under this design, this solution can still ensure that when region splitting is triggered, the transaction may continue to execute without being rolled back, and QPS will not fluctuate. While ensuring the execution efficiency of distributed transactions, business-transparent region splitting is achieved.

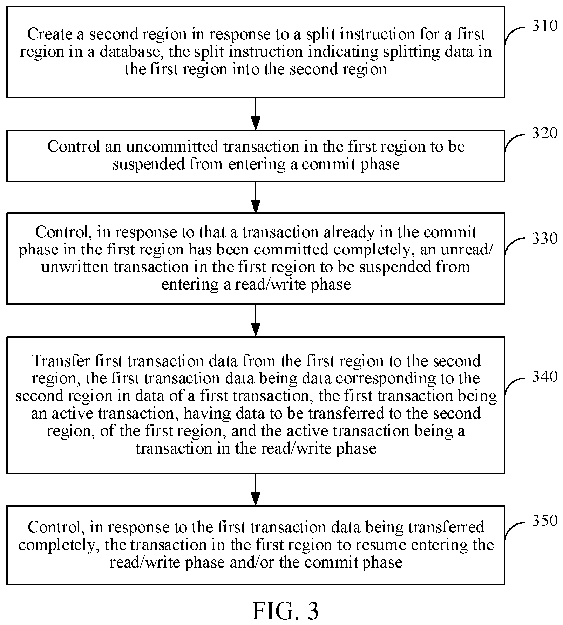

Please refer to FIG. 3, which shows a flowchart of a data region processing method according to an exemplary embodiment of this application. The method is performed by a computer device. As shown in FIG. 3, the method may include the following operation 310, operation 320, operation 330, operation 340, and operation 350. It is noted that the technical features in the following embodiments in this application can implements in their respective embodiments, or implemented in combination with features in any other embodiments. That is, the embodiments in the application can be implemented alone, or in combination with any one or more of the other embodiments in the application, to achieve different technical solutions and technical effects

**Operation 310:** Create a second region in response to a split instruction for a first region in a database, the split instruction indicating splitting data in the first region into the second region.

In this embodiment of this application, when receiving a split instruction for a first region (i.e., a first data region) in a database, the computer device may create a new second region (i.e., a second data region) on a storage cluster node of the first region.

The split instruction is configured for instructing the compute device to split data in the first region into the new second region. To be specific, some data in the first region is transferred into the second region.

The first region may be a leader copy in a Raft Group, and the computer device may synchronize the split instruction to followers corresponding to the first region.

The split instruction is configured for instructing splitting of a region. For example, a region on a node includes especially a lot of data, and the computer device may instruct, by using the split instruction, a part of the data to be migrated to another node. At this point, the region needs to be split on a current node.

On the one hand, after a central management and control cluster detects hotspot data to be migrated, the foregoing split instruction may be automatically issued to the storage cluster node where a region corresponding to the hotspot data resides.

On the other hand, a developer user transmits a hypertext transfer protocol (HTTP) request to the central management and control cluster. Based on the HTTP request, the central management and control cluster issues the split instruction to the storage cluster node where a corresponding region resides.

In addition, the developer user may manually enable or disable an automatic split function by transmitting an HTTP request to the central management and control cluster. After being disabled, the central management and control cluster will not issue split instructions automatically.

In some embodiments, the foregoing split instruction may indicate an ID of the first region, a range of the first region, and a range of the new second region, including a split key, a start key, an end key, a region ID, and the like.

Specifically, for example, the range of the first region is [A, D), and the new second region is split using the split key as B. Then, the range of the second region may be [B, D) (i.e., the start key is B and the end key is D). Correspondingly, the range of the first region after splitting may be [A, B). That is, in terms of data, the second region is a sub-region of the first region prior to the splitting.

In some embodiments, a preliminary operation of computing a split key is included before operation 310, which specifically includes:
S11: The central management and control cluster issues a job of computing a split key to the first region to be split in the storage cluster. After computing the split key, the first region reports the split key to the central management and control cluster.
S12: After obtaining the split key computed by the first region, the central management and control cluster generates a corresponding split instruction according to the split key, and then issues the split instruction to the first region and all followers of the first region.

**Operation 320:** Control an uncommitted transaction in the first region to be suspended from entering a commit phase.

In this embodiment of this application, after creating the second region in response to the split instruction for the first region in the database in operation 310, the computer device may control the uncommitted transaction in the first region to be suspended from entering the commit phase.

In this embodiment of this application, the uncommitted transaction is controlled to be suspended from entering the commit phase only after the construction of the second region is completed, while a transaction in a read/write phase and a newly initiated transaction are not affected. That is, the uncommitted transaction is a transaction in the write/read phase and has not entered the prepare phase. The foregoing solution can shorten time for blocking transactions executed based on the first region from entering the commit phase, and reduce the impact of region splitting on transactions.

In some embodiments, before operation 320, the method may include the following operations:
S21: Construct a split job context of the first region, where the split job context includes some job information, such as a first region ID, a second region ID, and a split key.
S22: Set a split job state to REGION_SPLIT_INIT.
S23: Transmit RPC to confirm that all follower copies of the first region enter the REGION_SPLIT_INIT state.

**Operation 330:** Control, in response to that a transaction already in the commit phase in the first region has been committed completely, an unread/unwritten transaction in the first region to be suspended from entering a read/write phase.

In this embodiment of this application, after the transactions in the first region that have entered (i.e., already in) the commit phase are committed completely (for example, all the transactions already in the commit phase have been committed), the computer device may control new transactions corresponding to the first region to be suspended from entering the read/write phase, i.e., suspend the initiation of new transactions. The new transactions refer to those in the first region that have not yet entered the read/write phase, while the foregoing operation has no impact on transactions already in the read/write phase.

In this embodiment of this application, prior to performing data transfer in operation 340, the process of blocking transactions is divided into two phases: blocking the uncommitted transaction in the first region from entering the commit phase in operation 320, and suspending new transactions corresponding to the first region from entering the read/write phase after the transactions that have entered/already in the commit phase are committed completely in operation 330. The foregoing solution can reduce the impact of region splitting on transactions.

**Operation 340:** Transfer first transaction data from the first region to the second region, the first transaction data being data corresponding to the second region in data of a first transaction, the first transaction being an active transaction, having data to be transferred to the second region, of the first region, and the active transaction being a transaction in the read/write phase.

In this embodiment of this application, the computer device may traverse the active transactions corresponding to the first region (i.e., transactions in the read/write phase) and transfer the first transaction data from the first region to the second region through RPC.

In this embodiment of this application, among the active transactions of the first region, it may be the case that only the transaction data of some active transactions may need to be fully or partially transferred to the second region. Therefore, it is necessary to make a judgment based on the split instruction. To be specific, data of each active transaction in the first region is traversed, so as to filter out the transaction data that needs to be transferred to the second region.

In some embodiments, the first transaction data for transferring to the second region is determined in response to the split instruction, for example according to a split key in the split instruction. Specifically, for example, the active transactions of the first region include transaction 1, transaction 2, and transaction 3. The split instruction is configured for instructing to transfer the data after the split key to the second region. If the data of transaction 1 is before the split key, the data of transaction 1 does not need to be transferred. If the data of transaction 2 is after the split key, all data of transaction 2 needs to be transferred to the second region. If part of the data of transaction 3 is before the split key and part of the data is after the split key, only the part of the data of transaction 3 that is after the split key needs to be transferred to the second region.

**Operation 350:** Control, in response to the first transaction data being transferred completely, the transaction in the first region to resume entering the read/write phase and/or the commit phase.

In this embodiment of this application, after the successful completion of data transfer in operation 340, the data hotspots on the first region are dispersed. The computer device may resume new transactions corresponding to the first region from entering the read/write phase, and resume transactions in the read/write phase from entering the commit phase.

In conclusion, according to the solutions shown in the embodiments of this application, a second region is created in response to a split instruction for a first region in a database. An uncommitted transaction in the first region is suspended from entering a commit phase. An unread/unwritten transaction in the first region is suspended, in response to that a transaction already in the commit phase in the first region has been committed completely, from entering a read/write phase. First transaction data is transferred from the first region to the second region, where the first transaction data is data, among data of a first transaction, corresponding to the second region after the splitting. The transaction in the first region is controlled, in response to the first transaction data being transferred completely, to resume entering the read/write phase and/or the commit phase. According to this solution, before transaction blocking, the second region is first constructed. Meanwhile, the transaction blocking is executed in two phases: controlling the uncommitted transaction to be suspended from entering the commit phase and controlling the unread/unwritten transaction to be suspended from entering the read/write phase. When a blocked transaction is committed, read/write of the transaction and a transaction to be committed completely are not affected. This application can shorten transaction blocking time while ensuring execution efficiency of a distributed transaction. It is noted that the embodiments described with reference to the drawings in this application are merely exemplary, and it is not limited in this application that the respective method must include all the steps as described and illustrated; rather, the method in the application may include some or all of the steps as listed, and the steps may be combined with each other arbitrarily to form various embodiments of the application.

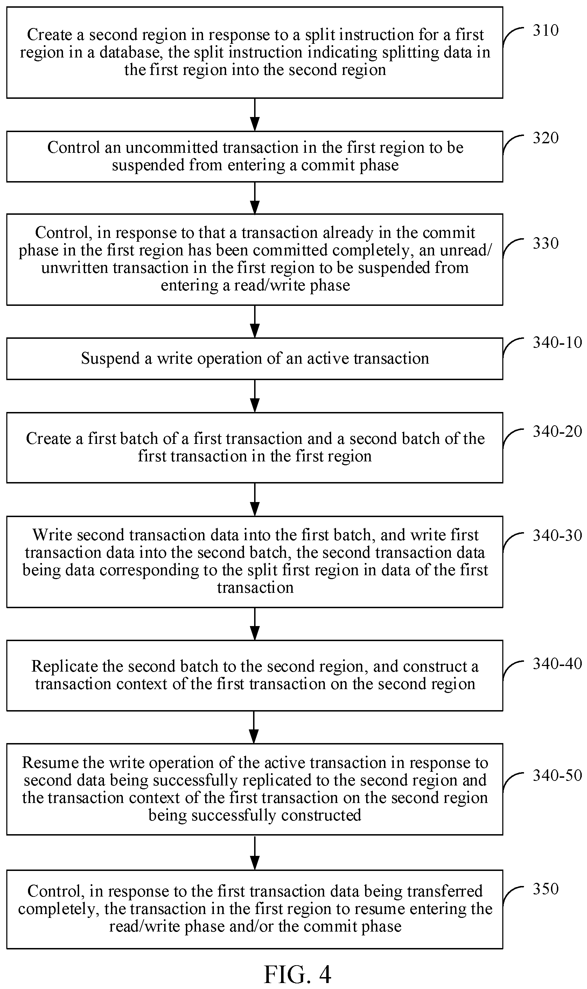

Please refer to FIG. 4, which shows a flowchart of a data region processing method according to another exemplary embodiment of this application. The method is performed by a computer device. As shown in FIG. 4, operation 340 in the embodiment shown in FIG. 3 may be implemented as operation 340-10, operation 340-20, operation 340-30, operation 340-40, and operation 340-50.

**Operation 340-10:** Suspend a write operation of the active transaction.

In this embodiment of this application, after controlling the unread/unwritten transaction in the first region to be suspended from entering the read/write phase in operation 330, the computer device may suspend the write operation of the active transaction corresponding to the first region to facilitate subsequent data splitting.

During the write prohibition period, if the storage cluster receives a write request issued by the computing cluster, a retry error code is returned.

**Operation 340-20:** Create a first batch of the first transaction and a second batch of the first transaction in the first region.

In this embodiment of this application, after suspending the write operation of the active transaction in operation 340-10, the computer device may establish a first batch (or, a first container) and a second batch (or, a second container) for the first transaction in the first region, so as to write transaction data into the corresponding batches. To be specific, the foregoing first batch and second batch are configured to store the data before the split key and the data after the split key in the first transaction, respectively.

In other embodiments, the computer device may further split an original write batch of the first transaction on the first region into the first batch and the second batch, which are configured to store the data before the split key and the data after the split key in the first transaction, respectively.

**Operation 340-30:** Write second transaction data into the first batch, and write the first transaction data into the second batch, the second transaction data being data corresponding to the split first region in data of the first transaction.

In this embodiment of this application, after establishing the first batch of the first transaction and the second batch of the first transaction in the first region in operation 340-20, the computer device traverses the transaction data in the read/write phase, writes the second transaction data into the first batch, and writes the first transaction data into the second batch.

To be specific, the transaction data after the split key is the first transaction data, and the transaction data before the split key is the second transaction data. If the data of transaction 1 is before the split key, the data of transaction 1 belongs to the second transaction data and needs to be written into the first batch. If the data of transaction 2 is after the split key, the data of transaction 2 belongs to the first transaction data and needs to be written into the second batch. If part of the data of transaction 3 is before the split key and part of the data is after the split key, the data of transaction 3 that is after the split key belongs to the first transaction data and needs to be written into the second batch, while the data that is before the split key belongs to the second transaction data and needs to be written into the first batch.

**Operation 340-40:** Replicate the second batch to the second region, and construct on the second region a transaction context of the first transaction.

In this embodiment of this application, after writing the second transaction data into the first batch and the first transaction data into the second batch in operation 340-30, the computer device may replicate the second batch to the second region, and construct, on the second region, the transaction context of the first transaction based on the first transaction data in the second batch, so that the second region can provide corresponding external services based on the transaction context of the first transaction.

In some embodiments, the computer device may transmit the data of the second batch to the second region through RPC, and construct the transaction context on the second region.

**Operation 340-50:** Resume the write operation of the active transaction in response to second data being successfully replicated to the second region and the transaction context of the first transaction being successfully constructed on the second region.

In this embodiment of this application, after successfully replicating the second batch to the second region in operation 340-40 and successfully constructing the transaction context of the first transaction on the second region, the splitting may be deemed successful. The computer device may resume the write operation of the active transaction corresponding to the first region to continue providing external services.

In this embodiment of this application, an exemplary solution for transferring first transaction data is provided, including: during a write prohibition phase of an active transaction, establishing a first batch of a first transaction and a second batch of the first transaction in the first region; and then replicating the second batch to the second region and constructing a transaction context of the first transaction on the second region. This solution can transfer first transaction data that needs to be transferred from the first region to the second region during the write prohibition phase of the active transaction, avoiding conflicts between transaction data transfer and transaction write operations.

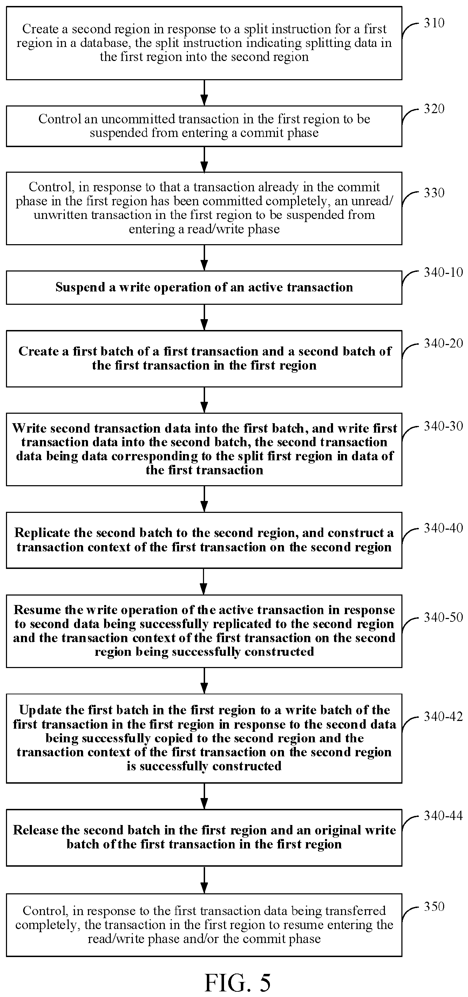

Please refer to FIG. 5, which shows a flowchart of a data region processing method according to still another exemplary embodiment of this application. The method is performed by a computer device. As shown in FIG. 5, before operation 340-50 in the embodiment shown in FIG. 4, the method further includes operation 340-42 and operation 340-44.

**Operation 340-42:** Update the first batch in the first region to a write batch of the first transaction in the first region in response to the second data being successfully replicated to the second region and the transaction context of the first transaction being successfully constructed on the second region.

In this embodiment of this application, after successfully replicating the second batch to the second region and successfully constructing the transaction context of the first transaction on the second region in operation 340-40, the splitting may be deemed successful. The computer device may update the first batch in the first region to the write batch of the first transaction in the first region, so as to provide services for the first transaction through the first batch.

In some embodiments, after the splitting is successful, the computer device may modify end key information about the first region according to the split instruction such as the split key, and move the second region to a region list for external services.

**Operation 340-44:** Release the second batch in the first region and an original write batch of the first transaction in the first region.

In this embodiment of this application, after updating the first batch in the first region to the write batch of the first transaction in the first region in operation 340-42, the computer device may release the second batch in the first region and the original write batch of the first transaction in the first region, enabling timely resource release and avoiding excessive memory consumption.

In this embodiment of this application, for the first transaction on the first region, the first batch is used as a new write batch of the first transaction. Since the second batch has been replicated to the second region through the foregoing operation 340-40, there is no need to retain the second batch on the first region, and the second batch may be directly released.

In this embodiment of this application, a supplementary solution before the foregoing operation 340-50 is provided, including, before resuming the write operation of the active transaction: updating the first batch in the first region to a write batch of the first transaction in the first region in response to the second data being successfully replicated to the second region and the transaction context of the first transaction being successfully constructed on the second region; and releasing the second batch in the first region and an original write batch of the first transaction in the first region. This solution can timely update the write batch of the first transaction and release redundant batches after successful splitting, saving the memory space of the first region.

In some embodiments, the method further includes:
modifying information about the first region in response to the second data being successfully replicated to the second region and the transaction context of the first transaction being successfully constructed on the second region; and
moving the second region to a region list for external services.

In this embodiment of this application, after the splitting is successful, the computer device may modify the information about the first region. Specifically, for example, an end key of the first region is modified according to the split key, and the second region is moved to the region list for external services, so that the newly created second region may provide external services.

In this embodiment of this application, a supplementary solution after the successful splitting is provided, including: modifying information about the first region and moving the second region to a region list for external services, so that the second region can provide external services, ensuring the execution efficiency of distributed transactions.

In some embodiments, the method further includes:
deleting the first batch and the second batch in response to a failure in replicating the second batch and/or a failure in constructing the transaction context of the first transaction on the second region;
resuming the write operation of the active transaction in the first region; and
clearing the second region.

In this embodiment of this application, if the process of writing the second transaction data into the first batch and the first transaction data into the second batch in operation 340-30 fails, or the process of replicating the second batch to the second region in operation 340-40 fails, or the process of constructing the transaction context of the first transaction on the second region fails, the computer device may deem the splitting unsuccessful. At this point, it is necessary to timely delete the first batch and the second batch, resume the write operation of the active transaction in the first region, and clear the second region.

In this embodiment of this application, a supplementary solution after the splitting failure is provided, including: deleting the first batch and the second batch, resuming the write operation of the active transaction in the first region, and clearing the second region. This solution can timely clear relevant data of the failed splitting, avoiding the occupation of database resources by useless data.

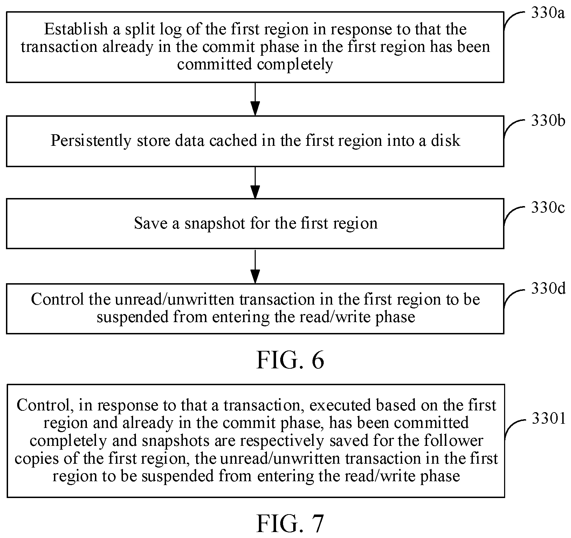

Based on the solution shown in FIG. 3 or FIG. 4, please refer to FIG. 6, which shows a flowchart of a data region processing method according to yet another exemplary embodiment of this application. The method is performed by a computer device. As shown in FIG. 6, operation 330 in the embodiment shown in FIG. 3 or FIG. 4 may be implemented as operation 330a, operation 330b, operation 330c, and operation 330d.

**Operation 330a:** Establish a split log of the first region in response to that the transaction already in the commit phase in the first region has been committed completely.

In this embodiment of this application, after the transactions in the first region that have entered/already in the commit phase are committed completely, the computer device may update the state of the first region from L_WORKING to L_SPLIT, wait for split logs of follower copies of the first region, and establish a split log of the first region.

In this embodiment of this application, the purpose of synchronizing the split logs of the follower copies of the first region to the split log of the first region is to ensure that all copies replay up to the same split index before allowing the second region to provide services.

The transaction data of committed transactions belongs to inactive transaction data and will be written into a storage instance of a corresponding node. Since all regions on the same node share the storage instance, the newly created second region may access the inactive transaction data of the first region, and this part of the transaction data does not need to be transferred.

In contrast, the data of the active transaction is not written into the storage instance and can only be accessed by the current region. Therefore, the data needs to be transferred from the first region to the newly created second region to enable the corresponding transactions to continue execution.

The storage instance (RocksDB) is a module within the storage cluster for storing data, including data structures Memtable and SSTable. Data in Memtable is stored in a memory and not persisted.

**Operation 330b:** Persistently store data cached in the first region into a disk.

In this embodiment of this application, after establishing the split log of the first region in operation 330a, the computer device persistently stores data cached in the first region into a disk.

In this embodiment of this application, the data cached in the first region includes data of the active transaction and data of an inactive transaction not flushed to SSTable.

In some embodiments, the data in the disk does not need to be split. This is because the first region and the newly created second region are located on the same physical node of the storage instance, and all regions on the same physical node of the storage instance share the data in the disk. Therefore, there is no need to split the data in the disk.

**Operation 330c:** Save a snapshot for the first region.

In this embodiment of this application, after persistently storing the data cached in the first region to the disk in operation 330b, the computer device saves a snapshot for the first region to facilitate subsequent replay processing.

The first region saves the snapshot using a split index, so that the first region no longer replays logs before the split index, thereby preventing the first region from replaying old data from the logs and overwriting new data written by the second region.

Taking Region 1 with a range of [A, H) as an example, before splitting, logs synchronized when transactions are committed on Region 1 may involve any data within [A, H).

It is assumed that transaction T1 commits a modification of E=1. Then, Region 1 splits into Region 2. The range of Region 1 becomes [A, C), and the range of Region 2 becomes [C, H). At this time, transaction T2 commits a modification of E=2 on Region 2.

From the foregoing description, E=2 written by transaction T2 is required to be the latest version.

However, if Region 1 is allowed to replay the logs before the split index, it is equivalent to allowing Region 1 to replay the logs written by transaction T1. Since the logs of Region 1 and Region 2 are replayed concurrently when a node starts, if the log replay of transaction T1 on Region 1 occurs after the log replay of transaction T2 on Region 2, E=1 of transaction T1 will be written to RocksDB after E=2 of transaction T2, resulting in that E=1 becomes the latest version instead, leading to data errors.

Therefore, it is necessary to prevent Region 1 from replaying the logs before the split index. In this way, the logs of transaction T1 will not be replayed, ensuring that E=2 is the latest version. The way to achieve this purpose is to save a snapshot for Region 1 using the split index.

In some embodiments, after saving the snapshot for the first region, the computer device may set a split job state to REGION_SPLIT_CREATE_NEW_REGION and wait for the follower copies to enter the REGION_SPLIT_CREATE_NEW_REGION state.

**Operation 330d:** Control the unread/unwritten transaction in the first region to be suspended from entering the read/write phase.

In this embodiment of this application, the computer device suspends new transactions corresponding to the first region from entering the read/write phase, i.e., prevents the initiation of new transactions executed based on, or on, the first region.

In this embodiment of this application, a supplementary solution for the foregoing operation 330 is provided, including: establishing a split log of the first region after the transaction, having entered/already in the commit phase, in the first region has been committed completely, persistently storing data cached in the first region into a disk, and saving a snapshot for the first region, facilitating the log synchronization of all follower copies of the first region and the replay of the first region.

In some embodiments, the method further includes:
creating a fourth region corresponding to a third region in response to the split instruction, the third region being one of follower copies of the first region;
obtaining a split log of the first region; and
saving a snapshot for the third region.

In this embodiment of this application, in response to the split instruction for the first region in the database, the computer device creates a fourth region corresponding to a third region, obtains a split log of the first region, and saves a snapshot for the third region.

The third region is any one of the follower copies of the first region. The third region and the first region synchronously create the fourth region corresponding to the third region in response to the split instruction.

In this embodiment of this application, a solution for execution jobs of the follower copies during the splitting process is provided, including: obtaining the split log of the first region, and saving a snapshot for the third region, enabling the follower copies to back up relevant data of the leader copy in a timely manner.

Based on the foregoing embodiments, please refer to FIG. 7, which shows a flowchart of suspending a new transaction corresponding to a first region from entering a read/write phase in a data region processing method according to an exemplary embodiment of this application. The method is performed by a computer device. As shown in FIG. 7, operation 330 may be implemented as operation 3301.

**Operation 3301:** Control, in response to that a transaction, which is executed based on the first region and already in the commit phase, has been committed completely and snapshots are respectively saved for the follower copies of the first region, the unread/unwritten transaction in the first region to be suspended from entering the read/write phase.

In this embodiment of this application, in the foregoing operation 330, the computer device may suspend new transactions executed based on the first region from entering the read/write phase only after a transaction executed based on the first region and already in the commit phase has been committed completely, and snapshots are respectively saved for the follower copies (e.g., the third region) of the first region.

In this embodiment of this application, a solution for execution jobs of the follower copies during the splitting process is provided, including: suspending new transactions executed based on the first region from entering the read/write phase in response to that the transaction executed based on the first region and already in the commit phase has been committed completely and snapshots are respectively saved for the follower copies of the first region, enabling the follower copies to back up relevant data of the leader copy in a timely manner and synchronously updating the state of each follower copy.

In some embodiments, the method further includes:
modifying information about the third region in response to the first region and the second region being successfully split; and
moving the fourth region to a region list for external services.

In this embodiment of this application, based on the foregoing embodiment of creating the fourth region corresponding to the third region, if the first region and the second region are split successfully (i.e., the first transaction data is successfully transferred from the first region to the second region), the computer device may modify information about the third region. For example, an end key of the third region is modified according to the split key, and the fourth region is moved to a region list for external services, so that the newly created fourth region can provide external services.

In this embodiment of this application, a solution for execution jobs of the follower copies after the successful splitting is provided, including: modifying information about the third region and moving the fourth region to the region list for external services, so that the fourth region can provide external services, ensuring the execution efficiency of distributed transactions.

In some embodiments, the method further includes:
clearing the fourth region in response to a failure in splitting the first region and the second region.

In this embodiment of this application, based on the foregoing embodiment of creating the fourth region corresponding to the third region, if the first region and the second region are split successfully (i.e., the first transaction data is unsuccessfully transferred from the first region to the second region), the computer device may clear the fourth region.

In this embodiment of this application, a solution for execution jobs of the follower copies after the splitting failure is provided, including: clearing the fourth region. This solution can timely clear relevant data of the failed splitting, avoiding the occupation of database resources by useless data.

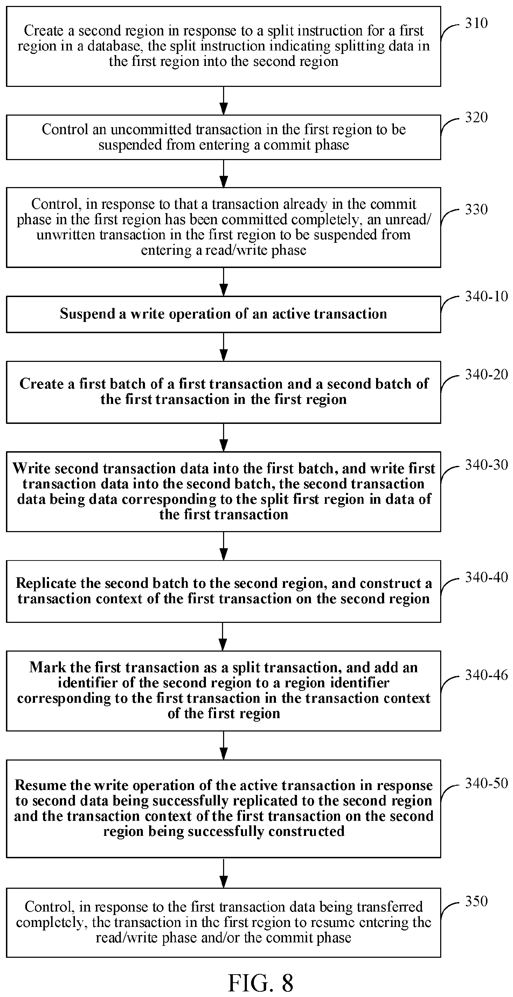

Based on the solution shown in FIG. 4, please refer to FIG. 8, which shows a flowchart of a data region processing method according to a further exemplary embodiment of this application. The method is performed by a computer device. As shown in FIG. 8, before operation 340-50 in the embodiment shown in FIG. 4, the method further includes operation 340-46.

**Operation 340-46:** Mark the first transaction as a split transaction, and add an identifier of the second region to a region identifier corresponding to the first transaction in the transaction context of the first region.

In this embodiment of this application, before resuming the write operation of the active transaction in operation 340-50, the computer device may mark the first transaction as a split transaction and record an ID of the second region in the context of the first transaction corresponding to the first region, avoiding omitting the new second region when committing the transaction corresponding to the second region and ensuring the atomicity of transaction commit.

The method further includes:
querying, in response to the first region receiving a prepare request of a third transaction and the third transaction being marked as a split transaction, the transaction context of the first region for a region identifier corresponding to the third transaction; and
returning a prepare response to a coordinator region of the third transaction in response to finding that the region identifier corresponding to the third transaction includes the identifier of the second region, the prepare response including the identifier of the second region, for the coordinator region to add the identifier of the second region as a participant region identifier of the third transaction.

In this embodiment of this application, the computer device may query, when the first region receives a prepare request of a third transaction and the third transaction being marked as a split transaction, the transaction context of the first region for a region ID corresponding to the third transaction.

When the queried region ID corresponding to the third transaction includes the ID of the second region, the computer device may return a prepare response to a coordinator region of the third transaction.

The prepare response includes the ID of the second region, to cause the coordinator region to add the ID of the second region as a participant region ID of the third transaction.

In this embodiment of this application, a solution for committing transactions marked as split transactions is provided, including: before resuming the write operation of the active transaction, marking the first transaction as a split transaction, and adding an ID of the second region to a region ID corresponding to the first transaction in the transaction context of the first region; when the first region receives a prepare request for the split third transaction, querying the transaction context of the first region for a region ID corresponding to the third transaction; and when the queried region ID corresponding to the third transaction includes the ID of the second region, returning a prepare response to a coordinator region of the third transaction, where the prepare response includes the ID of the second region, so that the coordinator region can add the ID of the second region as a participant region ID of the third transaction. This solution can find all regions involved in the transaction to be committed currently in the committing process of the split transaction, avoid the omission of split regions, and ensure the integrity of transaction commit.

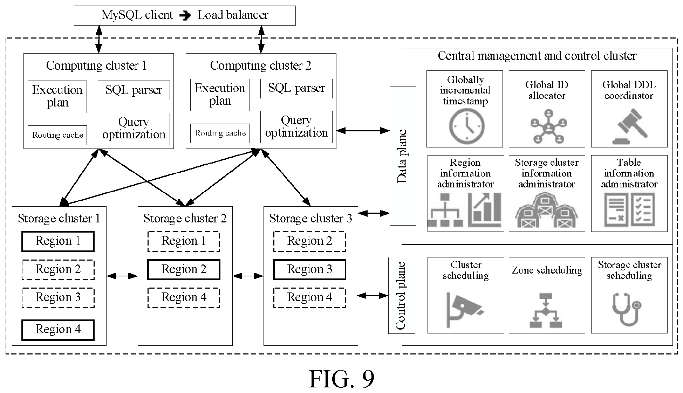

The foregoing technical solution of this embodiment of this application may be applied to another distributed database. Please refer to FIG. 9, which shows an architectural diagram of another distributed database according to this application. As shown in FIG. 9, the distributed database includes a computing cluster (SQLEngine), a storage cluster, and a central management and control cluster (MetaCluster, MC).

SQLEngine: A computing engine node primarily responsible for implementing structured query language (SQL) layer computing functions.

Storage cluster: A storage engine node primarily responsible for transaction and key-value (KV) storage functions.

MC: A cluster management node that manages data scheduling for the entire cluster and is also responsible for assigning globally unique timestamps.

The region split process based on the database shown in FIG. 9 may be as follows:

### MC Automatically Issues Region Splitting

When the MC detects hotspot data and needs to migrate the hotspot data:

First, a split instruction indicating a split region job is issued to the storage cluster node where a region resides, with a split key included in the job.

After receiving the job, the storage cluster moves a right boundary of an old region to the left to the split key, and simultaneously creates a new region. A left boundary of the New Region is the split key, and a right boundary is the original right boundary of the Old Region.

In this way, the hotspot data is split across two regions.

Subsequently, the MC issues a migrate region job to migrate one of the Regions to another relatively idle storage cluster node, thereby completing load balancing.

A user may manually enable or disable an automatic split function by transmitting an HTTP request to the MC. After being disabled, the MC will not issue the split region job automatically.

The HTTP request is, for example, as follows:
curl-XPUT
http://{mc_ip}:{mc_port}/meta-cluster/api/cluster/enable-split-region/{cluster_id}/{ enable}

### Parameter Description:

mc_ip represents an IP address of a node where the MC resides, mc_port represents a port number on which the MC receives an HTTP request, enable represents whether to enable a function of automatically detecting a region state and issuing a split region job, 0 represents disabled, and other positive integer values represent enabled.

A switch state of an automatic split function may be queried through the following HTTP request:
curl-XGET
http://{mc_ip}:{mc_port}/meta-cluster/api/cluster/is-enable-split-region/{cluster_id}

### Manually Trigger Region Splitting

A user may manually request the MC to issue a split region job by transmitting an HTTP request to the MC, and control the splitting of a particular Region according to a specific split key.

The HTTP request is, for example, as follows:
curl-XPUT
http://{mc_ip}:{mc_port}/meta-cluster/api/region/split-region/{cluster_id}/{region_i d}/{is_force}?key="{key}"

The API is used to manually trigger Region splitting and is therefore not affected by a split-region-enabled configuration parameter.

A specified split key may be passed through a key parameter. If not specified, the storage cluster will compute a split key. The key is a string represented in hexadecimal encoding.

### Main Process of Split Job (How to Ensure No Transaction Termination)

### I. Preparatory Operations

1. The MC issues a job to compute a split key to a Leader of a Region to be split in the storage cluster. After the Leader computes the split key, the split key is reported to the MC (if the storage cluster cannot find a suitable split key, a failure is returned).
2. After obtaining the split key computed by the storage cluster, the MC issues a split region job to all follower copies of the Region on the storage cluster.

A format of the split region job is, for example, as follows:

```
            message SplitRegionJob {
              uint64 job_id = 1;
            RegionMetaold region meta = 2;
            RegionMetanew_region_meta = 3;
            }
```

job_id uniquely identifies a region splitting job. RegionMeta contains information about the Region such as region_id, start_key, and end_key. old_region_meta contains pre-splitting information of the Old Region (both start_key and end_key correspond to values before splitting). new_region_meta contains information of the New Region (start_key is split_key, and end_key is required to be the same as end_key in old_region_meta).

### II. Process for a Leader to Receive a Split Job Issued by MC

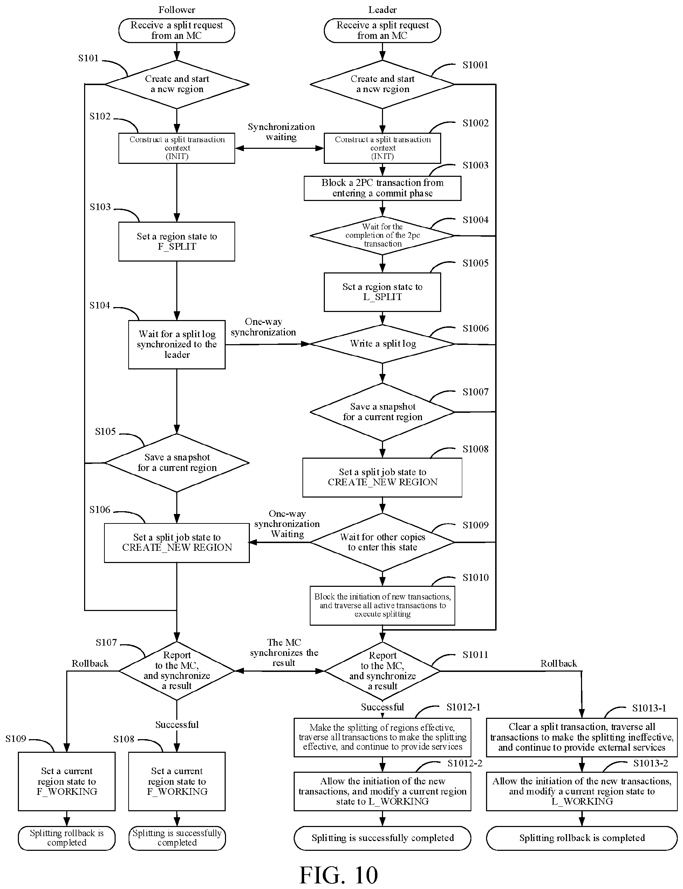

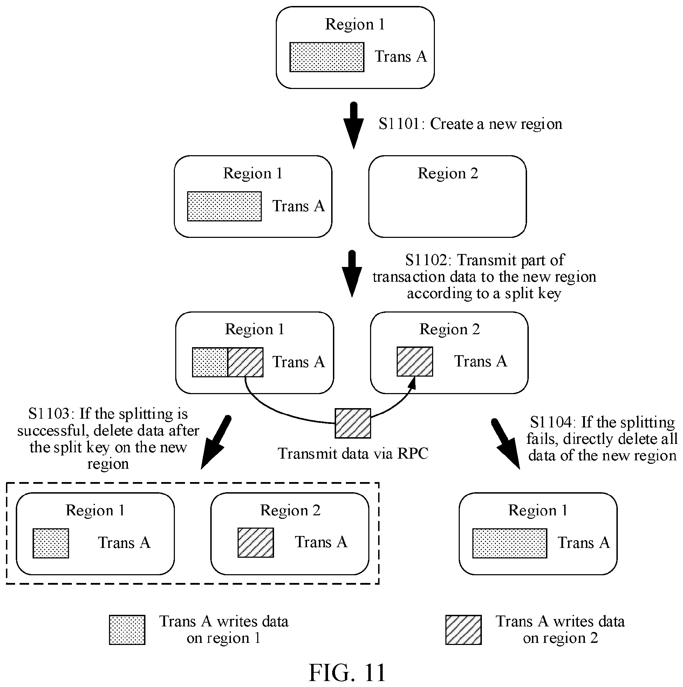

Please refer to FIG. 10, which shows an implementation flowchart of a data region processing method according to an exemplary embodiment of this application. Please refer to FIG. 11, which shows a split flowchart of a picture rendering method according to an exemplary embodiment of this application. As shown in FIG. 10 and FIG. 11, a split job process is as follows.

S1001: Create and start a New Region based on metadata such as a split key. The metadata may be information contained in a split job context or information included in a split job. The split job context contains some job information, such as an Old Region ID, a New Region ID, and the split key. Refer to operation "S1101: Create a new region" in FIG. 11.

S1002: Construct the split job context, set a job state to REGION_SPLIT_INIT, and transmit an RPC to confirm that other Old Region copies have entered this state.

S1003: Notify a transaction module to prevent all active transactions that have not entered 2PC from entering a commit phase (i.e., participants are not allowed to Prepare).

S1004: Wait for the completion of transactions that have entered 2PC, where transactions in a read/write phase and newly initiated transactions are not affected.

S1005: Update a state of a current Old Region from L_WORKING to L_SPLIT.

S1006: The Old Region synchronizes a region split raft log, to ensure that all copies replay up to the same split index before allowing a New Region to provide external services.

S1007: Persistently store data of the Old Region remaining in a memory to a disk, and save a snapshot for a Raft Group of the Old Region using the split index.

S1008: Set a split job state to REGION_SPLIT_CREATE_NEW_REGION.

S1009: Transmit an RPC to confirm that other copies have entered the state in operation S1008.

S1010: Block the initiation of new transactions, traverse all active transactions, and perform the following operations for each transaction:
a) Set a flag to disallow write operations such as put/delete. If a write request issued by an SQLEngine is received subsequently, a retry error code is returned.
b) Create old_region_writebatch and new_region_writebatch, traverse uncommitted data in a transaction write batch, and write the data to the two newly created write batches respectively according to the split key.
c) Transmit data in new_region_writebatch to a Leader of the New Region via the RPC, and construct a transaction context on the Leader of the New Region. Refer to operation "S1102: Transmit part of transaction data to the new region according to a split key" in FIG. 11, part of the data of transaction A (Trans A) is transmitted to the new region via the RPC.

S1011: Report to an MC that the split job on the current node has been completed. After the MC synthesizes the job states reported by all nodes, the state of each node job is replied to each node to determine whether to continue or roll back and clear the environment.

S1012-1: If the MC decides to continue execution, make the splitting of regions effective, traverse all transactions to make the splitting effective, and continue to provide services.
a) After receiving information, the current node modifies end key information of the Old Region according to metadata such as the split key, and moves the New Region to a region list for external services.
b) Traverse all active transactions again, and perform the following operations for each transaction:
   i. Update old region _writebatch to an effective write batch, and release new_region_writebatch and the old write batch. Refer to operation "S1103: If the splitting is successful, delete data after the split key on the new region" in FIG. 11.
   ii. Set the current transaction as a split transaction, and record a split identifier (New Region ID). This operation ensures the atomicity of transaction commit.
   iii. Allow the transaction to perform write operations such as put/delete and enter the commit phase.

S1012-2: After traversing all transactions, allow the initiation of a new transaction, modify the Region state to L_WORKING, complete the splitting, and end the process.

S1013-1: If the MC decides to roll back, clear the split transaction, traverse all transactions to make the splitting ineffective, and continue to provide external services.

After receiving the notification, the current node clears the New Region, traverses all active transactions, and performs the following operations for each transaction:
i. Release the newly created old_region_writebatch and new_region_writebatch, referring to operation "S1104: If the splitting fails, directly delete all data of the new region" in FIG. 11.
ii. Allow the transaction to perform write operations such as put/delete and enter the commit phase.

S1013-2: After traversing all transactions, allow the initiation of a new transaction, modify the region state to L_WORKING, complete the splitting rollback, and end the process.

If an exception occurs in operations S1001, S1006, or S1007, the split job state is set to REGION_SPLIT_FAILED, and the process of reporting the exception to the MC is initiated.

If an exception of other copies is detected in operation S1010, the process of reporting the exception to the MC is directly initiated. Since the cost of traversing each transaction by the Leader later is relatively high, invalid execution is required to be avoided as much as possible.

### III. Process for Follow to Receive a Split Job Issued by MC

As shown in FIG. 10, a split job process is as follows:
S101: Create and start a New Region according to metadata such as a split key.
S102: Construct a split job context, set a job state to REGION_SPLIT_INIT, and confirm that other Old Region copies have entered this state.
S103: Update a state of a current Old Region from F_WORKING to F_SPLIT.
S104: Wait for applying of a split log of a Leader.
S105: Save a snapshot for the current Old Region.
S106: Set a split job state to REGION_SPLIT_NEW_REGION.
S107: Report to an MC that the split job on the current node has been completed. After the MC synthesizes the job states reported by all nodes, the state of each node job is replied to each node to determine whether to continue or roll back and clear the environment.
S108: If the MC decides to continue execution, after receiving information, the current node modifies end key information of the Old Region according to metadata such as the split key, moves the New Region to a region list for external services, modifies the Region state to F_WORKING, completes the splitting, and ends the process.
S109: If the MC decides to roll back, after receiving information, the current node clears the New Region, modifies the Region state to F_WORKING, completes the splitting rollback, and ends the process.

In summary, from the perspective of a Region in the entire process, the life cycle of a transaction may span the splitting, but the Region splitting action and transaction commit are mutually exclusive in time. Therefore, the Region is required to prevent read/write transactions from entering a commit state and wait for all transactions that have already entered the commit state to complete before initiating the splitting action. Only after the splitting action is ended, the read/write transactions are allowed to continue entering the commit state.

The reason for this restriction is that during the recovery of a storage cluster, a plurality of Regions perform concurrent replay. The data correctness here depends on raft snapshot meta saved during splitting. A snapshot index corresponding to the snapshot meta is the split index. Since logs start to be replayed from the position of the snapshot index after startup of the Region, if transaction logs span the split index (e.g., a prepare raft log is synchronized before the split index and a commit raft log is synchronized after the split index), the Region will miss part of the transaction logs during replay after startup, leading to transaction data loss. Therefore, when synchronizing the split region log, it is imperative to ensure that transactions in the commit process have been ended.

Regarding the problem of QPS decline during region splitting in conventional distributed databases mentioned in the foregoing "Distributed Database Architecture Selection", the technical solution of this embodiment of this application addresses the problem by creating all copies of the New Region before disabling write operations for transactions on the Old Region, to ensure that after the New Region elects a Leader, transaction data of the Old Region is split to the New Region. This approach minimizes the duration of write disabling and achieves business transparency.

**The implementation of transaction commit integrity is as follows:**
For a distributed transaction, transaction contexts exist on a plurality of Regions in the storage cluster. To ensure the atomicity of transaction commit across the plurality of Regions (either all commit or all roll back), an SQLEngine issues a commit request to one of the Regions when committing a transaction, with the request containing a Region list accessed by the SQLEngine. The Region that receives the commit request acts as a coordinator and ensures the atomicity of transaction commit through 2PC.

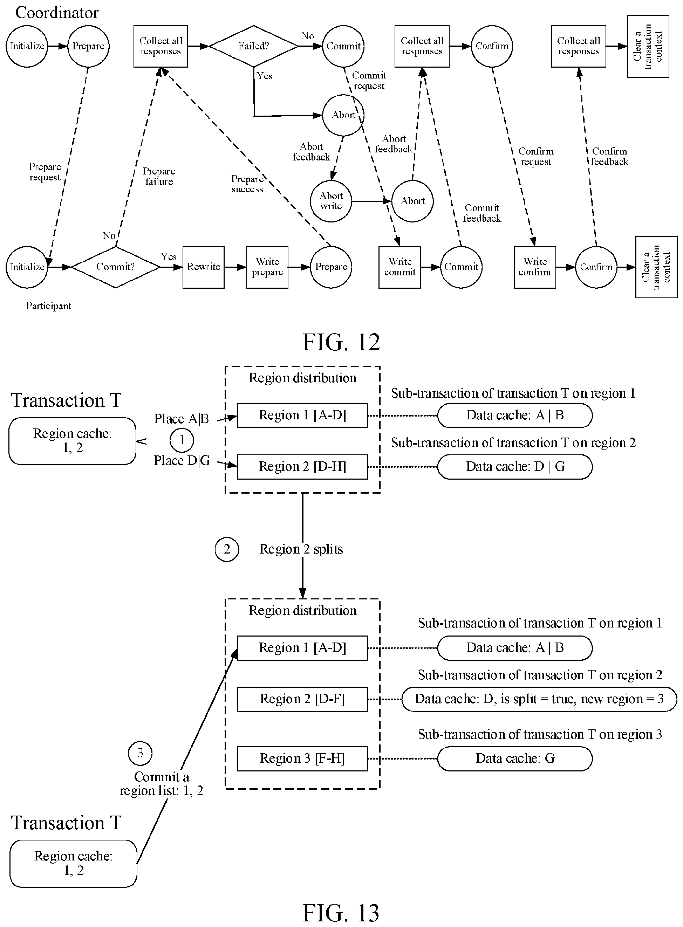

Please refer to FIG. 12, which shows a flowchart of a 2PC protocol according to this application. As shown in FIG. 12, a 2PC protocol is jointly completed by a coordinator and participants.

The coordinator enters a prepare phase and transmits a prepare request to each participant.

After receiving the prepare request, the participant executes either a commit response or an abort response. The commit response includes re-writing and entering the prepare phase after completing the preparation write.

The coordinator collects responses from all participants and determines whether the prepare has failed.

If the prepare fails, the prepare is aborted. After transmitting an abort feedback to all participants, all participants perform an abort write.

If the prepare succeeds, a commit phase is entered, and a commit request is transmitted to each participant.

After receiving the commit request, each participant executes a response, including performing a commit write and entering the commit phase.

The coordinator collects commit feedbacks from all participants and transmits a confirmation request to each participant.

After receiving the confirmation request, the participant executes a response, including performing a confirmation write, entering a confirmation phase, and clearing a transaction context.

After the coordinator collects the confirmation feedbacks from all participants, the transaction context is cleared.

If Region A splits into Region B before a transaction is committed, but the SQLEngine is not aware of the existence of Region B, the commit request will not carry Region B. Data on Region B will not be committed during the 2PC process, which violates the atomicity requirement of the transaction.

In the foregoing "Process for a Leader to Receive a Split Job Issued by MC", operation S1012-1 requires "marking the current transaction as a split transaction and recording an ID of a newly split New Region" in the context of all active transactions on the Old Region. The 2PC Prepare request issued by the coordinator carries a complete participant list. If the Old Region detects that the 2PC Prepare request does not include the ID of the newly split New Region, an error code is returned, requiring the coordinator to supplement the participant list before re-issuing the 2PC Prepare request.

Please refer to FIG. 13, which shows a schematic diagram of a 2PC case according to an exemplary embodiment of this application. As shown in FIG. 13, a case is provided. During a read/write phase, transaction T writes four keys (A, B, D, and G), where A and B are located on Region 1, and D and G are located on Region 2. Thus, a Region Cache of transaction T will include Region 1 and Region 2. It is assumed that transaction T pauses read/write operations for a while and then directly executes the commit. Coincidentally, during an interval when transaction T pauses read/write operations, Region 2 undergoes splitting and generates a new Region 3. At this point, a sub-transaction space related to transaction T on Region 2 is marked with is_split=true and new_region=3. After the splitting, transaction T initiates a commit request and specifies Region 1 as a coordinator.

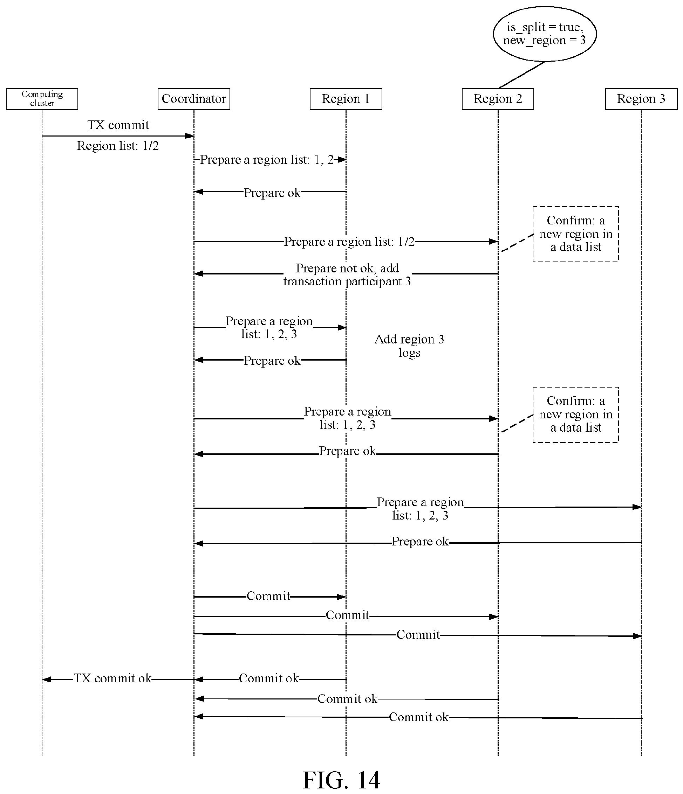

Please refer to FIG. 14, which shows a schematic diagram of commit of the 2PC case in FIG. 13. As shown in FIG. 14, a processing flow after Region 1 receives a transaction commit request (with region_list being 1 and 2) from an SQLEngine is as follows.

S1: A coordinator receives a transaction commit request, identifies that transaction participants are Region 1 and Region 2, and then transmits a prepare request to both Region 1 and Region 2. The prepare request includes a list of all participants known to the coordinator: Region 1 and Region 2.

S2: After receiving the prepare request, Region 1 checks an is_split variable in a sub-transaction space of transaction T on this Region. The value of the variable is false, indicating that no splitting occurred on the Region during the life cycle of a sub-transaction. Therefore, prepare is directly executed (writing logs and synchronizing to other copies), and a response to the coordinator with "prepare ok" is given upon success.

S3: After receiving the prepare request, Region 2 checks the is_split variable in the sub-transaction space of transaction T on this Region. The value of the variable is true, indicating that splitting occurred on the Region during the life cycle of the sub-transaction. The region further checks whether a newly split New Region is included in a participant list of the prepare request. Since the value of new_region is 3, which is not in the participant list, a response to the coordinator with "prepare not ok" is returned, and the coordinator is notified of the value of the New Region. A corresponding error code needs to be set to enable the coordinator to detect and handle this error specially. Specifically, for example, the error code is EC_TDS_TRANS_PREPARE_NEED_MORE_PART, which stands for "transaction prepare need more participants" and indicates that new participants need to be added to the participant list. When the coordinator receives this error code, a more_participants field is read from a response, which contains information, i.e., an ID (3) of the New Region.

S4: After receiving the response from Region 2 and detecting the error code indicating Region splitting, the coordinator retrieves the New Region ID (3) from the response, adds Region 3 to the participant list, recovers a new prepare phase, and transmits prepare requests to Region 1, Region 2, and Region 3 simultaneously. The prepare request includes a list of all participants known to the coordinator: Region 1, Region 2, and Region 3.

S5: After receiving the prepare request again, Region 1 finds that the state of the sub-transaction space of transaction T on this Region is already in the prepare state, compares the number of participants in the request with the number recorded, and detects new additions. Therefore, the newly added Region 3 is recorded, logs are committed, and a response to the coordinator with "prepare ok" is given again upon success.

S6: After receiving the prepare request again, Region 2 checks the is_split variable in the sub-transaction space of transaction T on this Region. The value of the variable is true, indicating that splitting occurred on the Region during the life cycle of the sub-transaction. The region further checks whether a newly split New Region is included in a participant list of the prepare request. Since the value of new_region is 3, which is in the participant list, prepare is executed (writing logs and synchronizing to other copies), and a response to the coordinator with "prepare ok" is given upon success.

S7: After receiving the prepare request, Region 3 checks an is_split variable in a sub-transaction space of transaction T on this Region. The value of the variable is false, indicating that no splitting occurred on the Region during the life cycle of a sub-transaction. Therefore, prepare is directly executed (writing logs and synchronizing to other copies), and a response to the coordinator with "prepare ok" is given upon success.

S8: After receiving the "prepare ok" responses from Region 1, Region 2, and Region 3, the coordinator continues to advance a 2PC transaction to a commit state.

From the foregoing process, when a Region in the participant list of the coordinator undergoes splitting and the newly split New Region is not in the participant list, an additional round of participant supplementation is required.

If the New Region splits again to form another new Region after the coordinator supplements the participant list, an additional round of participant supplementation is required from the perspective of process design. Therefore, it is necessary to limit the practical possibility of such a situation.

A feasible solution is to strictly limit a minimum protection time between the creation of a New Region and splitting. Since transactions typically complete quickly after entering 2PC, if the minimum protection time is significantly longer than a commit time of transactions after entering 2PC, it is almost impossible to encounter situations requiring more than two rounds of participant supplementation.

The minimum protection time refers to a minimum period that elapses after the creation of a split New Region A before it is allowed to process splitting jobs and split into New Region B. The time range may be on the order of seconds (e.g., 3 s), which only needs to be significantly longer than the time required for 2PC commit (under normal load conditions, the 2PC commit time is generally within 1 s).

The purpose of setting the minimum protection time is to prevent the coordinator from frequently receiving the EC_TDS_TRANS_PREPARE_NEED_MORE_PART error code. Specifically, for example:

After Region A splits into Region B, Region A receives a prepare request. At this point, the error code is set, Region B is placed in a more_participants field, and the coordinator is notified that Region B also needs to be a participant for transaction commit. However, before the coordinator transmits a prepare request to Region B, Region B splits into Region C, causing Region B to also set the error code and place Region C in the more_participants field. This results in excessive rounds of communication to expand the participant list.

The minimum protection time allows Region B to wait for a period before processing a split request. Therefore, when Region B splits into Region C, the 2PC process of the transaction has already been completed, which can reduce the impact on transaction commit and allow the transaction to quickly complete the 2PC process.

In addition, Region 1 in the above example will not undergo splitting during this process. The reason is that the transaction has successfully entered the prepare state on this Region, which will prevent Region 1 from splitting.

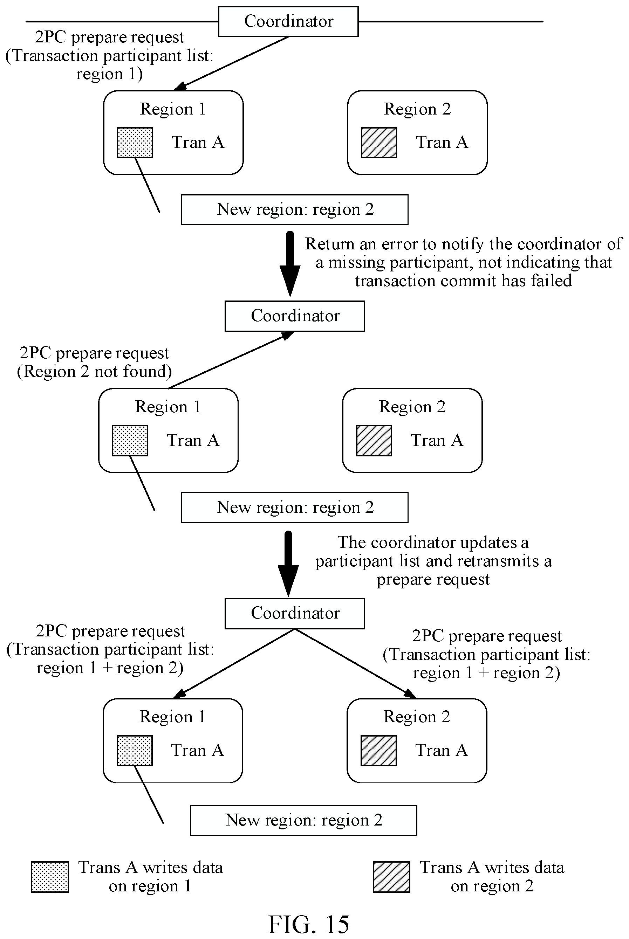

Please refer to FIG. 15, which shows a 2PC flowchart of a picture rendering method according to an exemplary embodiment of this application.

As shown in FIG. 15, if a transaction participant list accurately requested by 2PC only includes region 1, but region 1 has split into region 2, an error is returned to notify a coordinator of a missing participant. However, this does not indicate that transaction commit has failed.

The coordinator updates the participant list and retransmits a prepare request, with the transaction participant list including both region 1 and region 2.

In summary, this embodiment of this application provides a transaction-transparent region splitting method. This method can quickly split regions and disperse hotspot data in systems that support distributed transactions. While ensuring the integrity of transaction commit, this data splitting method offers high splitting speed, guarantees no impact on business writes, avoids performance fluctuations and write failures, and enables distributed storage systems to achieve smooth load balancing without user awareness.

This embodiment of this application provides a region splitting method that is transparent to data writes. Applied to storage systems supporting transaction functions or batch atomic write functions, this method ensures the correctness of concurrent data writes and region splitting, as well as the integrity of transaction commit.

This method minimizes the time for blocking transactions, prevents QPS degradation and transaction rollback, and ensures user-transparent region splitting during writes.

This method eliminates the need for operation and maintenance personnel to manually adjust partition sizes. A management and control node automatically evaluates whether to issue split jobs based on the size of each partition, achieving automatic load balancing.

Additionally, a region splitting policy mentioned in this embodiment is not limited to distributed database systems, and a basic data unit corresponding to underlying storage is not limited to KV data. For example, file storage, B-Tree-based table data storage, and other storage types may implement region splitting using similar methods, provided that the system can uniquely map data to corresponding regions.

The "synchronizing raft log" mentioned in this embodiment is merely a means for active-standby data synchronization based on Raft Group. For storage systems implementing active-standby synchronization via a distributed consistency (Paxos) protocol, it may be replaced with "synchronizing Paxos resolutions". For standalone databases, it may be replaced with "persisting a write ahead log (WAL) to disk".

This embodiment of this application adopts a data partitioning manner of "key interval-based partitioning", to split a single region into two regions by specifying a split key. However, for storage systems using a "key hash-based partitioning" technology, a split hash value may be specified to split regions. Regardless of a data partitioning manner, as long as the data can be partitioned into two parts, the approach of this solution is applicable.

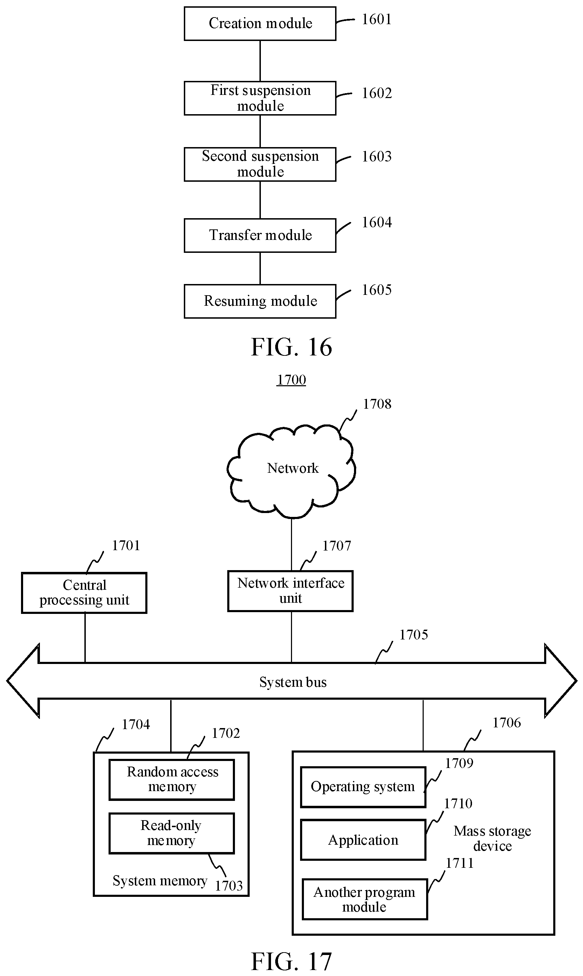

FIG. 16 shows a block diagram of a data region processing apparatus according to an exemplary embodiment of this application. The apparatus may be configured to perform all or some operations, performed by a computer device, of the method shown in FIG. 3, FIG. 4, FIG. 5, FIG. 6, FIG. 7, or FIG. 8. As shown in FIG. 16, the apparatus includes:
a creation module 1601, configured to create a second region in response to a split instruction for a first region in a database, the split instruction indicating splitting data in the first region into the second region;
a first suspension module 1602, configured to control an uncommitted transaction in the first region to be suspended from entering a commit phase;
a second suspension module 1603, configured to control, in response to that a transaction already in the commit phase in the first region has been committed completely, an unread/unwritten transaction in the first region to be suspended from entering a read/write phase;
a transfer module 1604, configured to transfer first transaction data from the first region to the second region, the first transaction data being data corresponding to the second region in data of a first transaction, the first transaction an active transaction, having/corresponding to data to be transferred to the second region, of the first region, and the active transaction being a transaction in the read/write phase; and
a resuming module 1605, configured to control, in response to the first transaction data being transferred completely, the transaction in the first region to resume entering the read/write phase and/or the commit phase.

In some embodiments, the transfer module 1604 is configured to:
suspend a write operation of the active transaction;
create a first batch of the first transaction and a second batch of the first transaction in the first region;
write second transaction data into the first batch, and write the first transaction data into the second batch, the second transaction data being data corresponding to the split first region in data of the first transaction;
replicate the second batch to the second region, and construct on the second region a transaction context of the first transaction; and
resume the write operation of the active transaction in response to second data being successfully replicated to the second region and the transaction context of the first transaction being successfully constructed on the second region.

In some embodiments, the apparatus further includes an update module, configured to:
update the first batch in the first region to a write batch of the first transaction in the first region in response to the second data being successfully replicated to the second region and the transaction context of the first transaction being successfully constructed on the second region; and
release the second batch in the first region and an original write batch of the first transaction in the first region.

In some embodiments, the apparatus further includes a modification module, configured to:
modify information about the first region in response to the second data being successfully replicated to the second region and the transaction context of the first transaction being successfully constructed on the second region; and
move the second region to a region list for external services.

In some embodiments, the apparatus further includes a deletion module, configured to:
delete the first batch and the second batch in response to a failure in replicating the second batch and/or a failure in constructing the transaction context of the first transaction on the second region;
resume the write operation of the active transaction; and
clear the second region.

In some embodiments, the apparatus further includes an establishment module, configured to:
establish a split log of the first region in response to that the transaction, having entered/already in the commit phase, in the first region has been committed completely;
persistently store data cached in the first region into a disk; and
save a snapshot for the first region.

In some embodiments, the apparatus further includes an obtaining module, configured to:
create a fourth region corresponding to a third region in response to the split instruction, the third region being one of follower copies of the first region;
obtain a split log of the first region; and
save a snapshot for the third region.

In some embodiments, the second suspension module 1603 is configured to:
control, in response to that a transaction, executed based on the first region and already in the commit phase has been committed completely and snapshots are respectively saved for the follower copies of the first region, the unread/unwritten transaction in the first region to be suspended from entering the read/write phase.

In some embodiments, the apparatus further includes a moving module, configured to:
modify information about the third region in response to the first region and the second region being successfully split; and
move the fourth region to a region list for external services.

In some embodiments, the apparatus further includes a clearing module, configured to:
clear the fourth region in response to a failure in splitting the first region and the second region.

In some embodiments, the apparatus further includes an addition module, configured to:
mark the first transaction as a split transaction, and add an identifier of the second region to a region identifier corresponding to the first transaction in the transaction context of the first region.

The apparatus further includes a query module, configured to:
query, in response to the first region receiving a prepare request of a third transaction and the third transaction being marked as a split transaction, the transaction context of the first region for a region identifier corresponding to the third transaction; and
return a prepare response to a coordinator region of the third transaction in response to finding that the region identifier corresponding to the third transaction includes the identifier of the second region, the prepare response including the identifier of the second region, to cause the coordinator region to add the identifier of the second region as a participant region identifier of the third transaction.

FIG. 17 shows a structural block diagram of a computer device 1700 according to an exemplary embodiment of this application. The computer device may be implemented as the server in the foregoing solution in this application. The computer device 1700 includes a central processing unit (CPU) 1701, a system memory 1704 including a random access memory (RAM) 1702 and a read-only memory (ROM) 1703, and a system bus 1705 connecting the system memory 1704 and the CPU 1701. The computer device 1700 further includes a mass storage device 1706 configured to store an operating system 1709, an application program 1710, and another program module 1711.

The mass storage device 1706 is connected to the central processing unit 1701 through a mass storage controller (not shown) connected to the system bus 1705. The mass storage device 1706 and a computer-readable medium associated therewith provide non-volatile storage for the computer device 1700. In other words, the mass storage device 1706 may include a computer-readable medium (not shown) such as a hard disk or a compact disc read-only memory (CD-ROM) drive.

Generally, the computer-readable medium may include a computer storage medium and a communication medium. The computer storage medium includes volatile and non-volatile media, and removable and non-removable media that are implemented by any method or technology for storing information such as computer-readable instructions, data structures, program modules, or other data. The computer storage medium includes a RAM, a ROM, an erasable programmable read only memory (EPROM), an electrically-erasable programmable read-only memory (EEPROM), a flash memory or another solid-state memory technology, a CD-ROM, a digital versatile disc (DVD) or another optical memory, a tape cartridge, a magnetic tape, a disk memory, or another magnetic storage device. Certainly, those skilled in art may understand that the computer storage medium is not limited to the above several types. The foregoing system memory 1704 and mass storage device 1706 may be collectively referred to as a memory.

According to various embodiments of this application, the computer device 1700 may further be connected, over a network such as the Internet, to a remote computer on the network and run. To be specific, the computer device 1700 may be connected to a network 1708 through a network interface unit 1707 which is connected to the system bus 1705, or may be connected to another type of network or remote computer system (not shown) by using the network interface unit 1707.

The memory further includes at least one computer program. The at least one computer program is stored in a memory. The CPU 1701 executes the at least one computer program to implement all or some of the operations in the method shown in various embodiments described above.

In an exemplary embodiment, a chip is further provided. The chip includes a programmable logic circuit and/or program instructions. When running on a computer device, the chip is configured to implement the data region processing method according to the foregoing aspect.

In an exemplary embodiment, a computer program product is further provided. The computer program product includes computer instructions. The computer instructions are stored in a computer-readable storage medium. A processor of a computer device reads the computer instructions from the computer-readable storage medium. The processor reads and executes the computer instructions from the computer-readable storage medium, to implement the data region processing method provided in the foregoing method embodiments.

In an exemplary embodiment, a computer-readable storage medium is further provided. The computer-readable storage medium has a computer program stored herein. The computer program is loaded and executed by a processor to implement the data region processing method provided in the foregoing method embodiments.

All or some of the operations of the foregoing embodiments may be implemented by hardware, or may be implemented by a program instructing relevant hardware. The program may be stored in a computer-readable storage medium. The storage medium may be a ROM, a disk, an optical disc, or the like.

A person skilled in the art may be aware that in the foregoing one or more examples, functions described in embodiments of this application may be implemented by using hardware, software, firmware, or any combination thereof. When implemented by using software, the functions may be stored in a computer-readable medium or transmitted as one or more instructions or code in a computer-readable medium. The computer-readable medium includes a computer storage medium and a communication medium. The communication medium includes any medium that enables a computer program to be transmitted from one place to another. The storage medium may be any available medium accessible to a general-purpose or special-purpose computer.

The foregoing descriptions are merely exemplary embodiments of this application, but are not intended to limit this application. Any modification, equivalent replacement, or improvement made within the spirit and principle of this application shall fall within the protection scope of this application.

## Claims

1. A data region processing method, performed by a computer device, the method comprising:
creating a second region in response to a split instruction for a first region in a database, the split instruction indicating splitting data in the first region into the second region;
controlling an uncommitted transaction in the first region to be suspended from entering a commit phase;
controlling, in response to that a transaction already in the commit phase in the first region has been committed completely, an unread/unwritten transaction in the first region to be suspended from entering a read/write phase;
transferring first transaction data from the first region to the second region, the first transaction data corresponding to the second region in data of a first transaction, the first transaction being an active transaction, having data to be transferred to the second region, of the first region, and the active transaction being a transaction in the read/write phase; and
controlling, in response to the first transaction data being transferred completely, the transaction in the first region to resume entering the read/write phase and/or the commit phase.

2. The method according to claim 1, wherein the transferring first transaction data from the first region to the second region comprises:
suspending a write operation of the active transaction;
creating a first batch of the first transaction and a second batch of the first transaction in the first region;
writing second transaction data into the first batch, and writing the first transaction data into the second batch, the second transaction data being data corresponding to the split first region in the data of the first transaction;
replicating the second batch to the second region, and constructing on the second region a transaction context of the first transaction; and
resuming the write operation of the active transaction in response to second data being successfully replicated to the second region and the transaction context of the first transaction being successfully constructed on the second region.

3. The method according to claim 2, wherein before the resuming the write operation of the active transaction, the method further comprises:
updating the first batch in the first region to a write batch of the first transaction in the first region in response to the second data being successfully replicated to the second region and the transaction context of the first transaction being successfully constructed on the second region; and
releasing the second batch in the first region and an original write batch of the first transaction in the first region.

4. The method according to claim 2 or 3, further comprising:
modifying information about the first region in response to the second data being successfully replicated to the second region and the transaction context of the first transaction being successfully constructed on the second region; and
moving the second region to a region list for external services.

5. The method according to any one of claims 2 to 4, further comprising:
deleting the first batch and the second batch in response to a failure in replicating the second batch and/or a failure in constructing the transaction context of the first transaction on the second region;
resuming the write operation of the active transaction; and
clearing the second region.

6. The method according to any one of claims 1 to 5, wherein the controlling, in response to that a transaction already in the commit phase in the first region has been committed completely, an unread/unwritten transaction in the first region to be suspended from entering a read/write phase, comprises:
establishing a split log of the first region in response to that the transaction already in the commit phase in the first region has been committed completely;
persistently storing data cached in the first region into a disk;
saving a snapshot for the first region; and
controlling the unread/unwritten transaction in the first region to be suspended from entering the read/write phase.

7. The method according to any one of claims 1 to 6, further comprising:
creating a fourth region corresponding to a third region in response to the split instruction, the third region being one of follower copies of the first region;
obtaining a split log of the first region; and
saving a snapshot for the third region.

8. The method according to any one of claims 1 to 7, wherein the controlling, in response to that a transaction already in the commit phase in the first region has been committed, an unread/unwritten transaction in the first region to be suspended from entering a read/write phase, comprises:
controlling, in response to that a transaction, executed based on the first region and already in the commit phase, has been committed completely and snapshots are respectively saved for the follower copies of the first region, the unread/unwritten transaction in the first region to be suspended from entering the read/write phase.

9. The method according to claim 7 or 8, further comprising:
modifying information about the third region in response to the first region and the second region being successfully split; and
moving the fourth region to a region list for external services.

10. The method according to any one of claims 7 to 9, further comprising:
clearing the fourth region in response to a failure in splitting the first region and the second region.

11. The method according to any one of claims 2 to 10, wherein before the resuming the write operation of the active transaction in response to the transaction context of the first transaction on the second region being successfully constructed, the method further comprises:
marking the first transaction as a split transaction, and adding an identifier of the second region to a region identifier corresponding to the first transaction in the transaction context of the first region; and
the method further comprises:
querying, in response to the first region receiving a prepare request of a third transaction and the third transaction being marked as a split transaction, the transaction context of the first region for a region identifier corresponding to the third transaction; and
returning a prepare response to a coordinator region of the third transaction in response to finding that the region identifier corresponding to the third transaction comprises the identifier of the second region, the prepare response comprising the identifier of the second region, for the coordinator region to add the identifier of the second region as a participant region identifier of the third transaction.

12. A data region processing apparatus, comprising:
a creation module, configured to create a second region in response to a split instruction for a first region in a database, the split instruction indicating splitting data in the first region into the second region;
a first suspension module, configured to control an uncommitted transaction in the first region to be suspended from entering a commit phase;
a second suspension module, configured to control, in response to that a transaction already in the commit phase in the first region has been committed completely, an unread/unwritten transaction in the first region to be suspended from entering a read/write phase;
a transfer module, configured to transfer first transaction data from the first region to the second region, the first transaction data being data corresponding to the second region in data of a first transaction, the first transaction being an active transaction, having data to be transferred to the second region, of the first region , and the active transaction being a transaction in the read/write phase; and
a resuming module, configured to control, in response to the first transaction data being transferred completely, the transaction in the first region to resume entering the read/write phase and/or the commit phase.

13. A computer device, comprising a processor and a memory, the memory having at least one computer instruction stored therein, the at least one computer instruction being loaded and executed by the processor to implement the data region processing method according to any one of claims 1 to 11.

14. A computer-readable storage medium, having at least one computer instruction stored therein, the at least one computer instruction being loaded and executed by a processor to implement the data region processing method according to any one of claims 1 to 11.

15. A computer program product, comprising computer instructions, the computer instructions being stored in a computer-readable storage medium, and the computer instructions being read and executed by a processor of a computer device to implement the data region processing method according to any one of claims 1 to 11.
